# EUROPÄISCHE PATENTSCHRIFT

(11) **EP 0 379 054 B1**
(45) Veröffentlichungstag und Bekanntmachung des Hinweises auf die Patenterteilung: **03.08.1994**
(21) Anmeldenummer: 90100480.4
(22) Anmeldetag: 11.01.1990
(51) Int. Cl.: B01D 25/26, B01D 37/02

(54) **Filtervorrichtung**
Filter device
Dispositif filtrant

(30) Priorität: 14.01.1989 DE 3900934
(43) Veröffentlichungstag der Anmeldung: 25.07.1990
(73) Patentinhaber: KHS Maschinen- und Anlagenbau Aktiengesellschaft, D-47057 Duisburg (DE)
(72) Erfinder: Becker, Hans F., Ing. grad., D-6537 Gensingen (DE); Krulitsch, Dieter Rudolf, Ing. grad., D-6550 Bad Kreuznach (DE)

(56) Entgegenhaltungen:
- CH-A- 322 613
- CH-A- 439 223
- DE-C- 749 333
- FR-A- 629 059
- FR-A- 1 516 370
- GB-A- 1 021 331
- US-A- 3 285 417
- US-A- 3 443 697
- CHEMICAL ENGINEERING, vol. 79, Nr. 11, 15. Mai 1972, Seiten 88-94, McGraw-Hill, New York, US; G.F. MALONEY: "For saturated solutions ... Selecting and using"

## Beschreibung

Die Erfindung bezieht sich auf eine Filtervorrichtung gemäß Oberbegriff Patentanspruch 1.

Bei einer bekannten Filtervorrichtung dieser Art in Form einer Filterpresse (DE-A-36 17 519) sind zwischen den horizontalen Filterelementen bzw. Trubrahmen jeweils eine Verteilerkammer sowie ein Trubraum ausgebildet. Jeder Trubraum ist von der zugehörigen, darüberliegenden Verteilerkammer durch eine Wandung bzw. einen Wandabschnitt in Form eines Leitbleches getrennt und steht am Umfang des Leitbleches durch einen dort gebildeten Durchlaßschlitz mit dem darunterliegenden Trubraum in Verbindung. Im Bereich der vertikalen Filtermittelachse weist jede Verteilerkammer an ihrer oberen Begrenzung, die von der Unterseite des jeweils darüberliegenden Filterelementes gebildet ist, der Mitte des Leitblechs gegenüberliegend eine Eintrittsöffnung auf, die über einen in diesem Filterelement ausgebildeten, radial zur Filtermittelachse M verlaufenden, sich über den halben Durchmesser des Filterelementes erstreckenden und daher sehr langen Verbindungskanal mit dem Unfiltratkanal verbunden ist, der gegenüber der Filtermittelachse versetzt am Außenumfang der Filterelemente vorgesehen ist. In ähnlicher Weise weist bei dieser bekannten Vorrichtung jedes Filterelement (mit Ausnahme des obersten Filterelementes) im Bereich der Filtermittelachse und unterhalb der Filterschicht einen Filtratauslaß auf, der ebenfalls über einen radial zur Filtermittelachse verlaufenden, relativ langen Verbindungskanal mit einem Filtratkanal in Verbindung steht, der wiederum gegenüber der Filtermittelachse radial versetzt am Außenumfang der Filterelemente gebildet ist. Schon allein durch die vorgenannten Verbindungskanäle ist diese bekannte Filtervorrichtung in konstruktiver Hinsicht relativ aufwendig. Nachteilig ist bei dieser bekannten Filtervorrichtung aber u.a. auch, daß bei der in Richtung der Filtermittelachse von oben nach unten verlaufenden Strömungsrichtung des in die jeweilige Verteilerkammer eintretenden Unfiltrats das unterhalb der Eintrittsöffnung vorgesehene Leitblech einen relativ großen Durchmesser aufweisen muß, um ein Verwirbeln oder Wegschwemmen der auf der jeweiligen Filterschicht ausgebildeten Anschwemmschicht aus Filterhilfsmitteln zu vermeiden. Der am Umfang des Leitbleches gebildete, die Verteilerkammer mit dem darunterliegenden Trubraum verbindende Durchlaßschlitz ist daher relativ schmal, so daß sich für das das Leitblech umströmende Unfiltrat im Bereich des Durchlaßschlitzes eine relativ hohe Strömungsgeschwindigkeit ergibt. Nachteilig ist bei der bekannten Filtervorrichtung auch, daß zum Reinigen der Filterbereiche, d. h. zum Austragen der Filterrückstände ein gesonderter Kanal vorgesehen ist, in den die von einem Spülmittel gelösten Filterrückstände zusammen mit diesem Spülmittel über jeweils einen Auslaßschlitz mit relativ kleinem Querschnitt abgeführt werden. Das Austragen der Filterrückstände erfordert relativ lange Zeit und eine große Menge an Spülmittel. Wegen des relativ kleinen Querschnitts der Auslaßschlitze besteht weiterhin auch die Gefahr, daß diese Auslaßschlitze leicht verstopfen, insbesondere dann, wenn beim Austragen die Filterrückstände nicht vollständig im Spülmittel gelöst sind, sondern dort Klumpen usw. bilden.

Es ist zwar bekannt, bei einem Anschwemmfilter in der Art eines Kesselfilters (US-A-3443 697) für jedes Filterelement eine Verteilerkammer vorzusehen, die einen Unfiltratkanal umgibt und über eine Eintrittsöffnung mit dem Unfiltratkanal sowie über eine Austrittsöffnung mit einem Trubraum in Verbindung steht. Diese Verteilerkammer ist jedoch neben dem Trubraum angeordnet und umschließt nur mit geringem radialen Abstand den Unfiltratkanal, der Bestandteil eines Steigrohres ist. Abgesehen davon, daß die Verteilerkammer sich in einem Bereich erstreckt, der als Filterfläche genutzt werden könnte, ist die Verteilerkammer aufgrund ihrer geringen radialen Erstreckung und der sie mit dem Trubraum und mit dem Unfiltratkanal verbindenden engen Bohrungen ungeeignet für eine optimale Arbeitsweise bei hoher Mengenleistung.

Aufgabe der Erfindung ist es, eine Filtervorrichtung der eingangs geschilderten Art aufzuzeigen, die bei vereinfachter konstruktiver Ausbildung nicht nur eine optimale Arbeitsweise insbesondere auch bei hoher Mengenleistung sicherstellt, sondern auch eine vereinfachte und schnelle Reinigung ermöglicht.

Zur lösung dieser Aufgabe ist eine Filtervorrichtung entsprechend dem kennzeichnenden Teil des Patentanspruchs 1 ausgebildet.

Da bei der erfindungsgemäßen Filtervorrichtung die Verteilerkammern über dem Trubraum vorgesehen sind in der Weise, daß das Unfiltrat einerseits unmittelbar vom Unfiltratkanal in die Verteilerkammern eintreten und ohne Behinderung durch Verengungen des Fließquerschnitts aus den Kammern in den Trubraum austreten kann, entfällt eine aufwendige, enge Verbindungskanäle und ein separates, den Unfiltratkanal beinhaltendes Verteilerrohr aufweisende Konstruktion.

In strömungsmäßiger Hinsicht besonders günstige Bedingungen ergeben sich bei der erfindungsgemäßen Filtervorrichtung zum einen dadurch, daß durch die Ausbildung der Verteilerkammern deren wirksamer Querschnitt mit zunehmendem Abstand von der Filtermittelachse zunimmt, wodurch innerhalb der Verteilerkammern eine zunehmende Verlangsamung der Strömungsgeschwindigkeit des Unfiltrats erreicht wird, aber auch dadurch, daß das Unfiltrat in die Verteilerkammern in einer Strömungsrichtung radial zur Filtermittelachse eintritt und auch beim Austritt aus diesen Verteilerkammern diese radial zur Filtermittelachse verlaufende Strömungsrichtung aufweist. Durch die erfindungsgemäße Ausbildung ist sichergestellt, daß sich ohne ein Aufwirbeln oder Wegschwemmen der auf den Filterschichten gebildeten Anschwemmschichten aus Filterhilfsmittel an den einzelnen Filterbereichen aus den ausgefilterten Fest- oder Trubstoffen (ggf. in Verbindung mit dem Unfiltrat zugesetzten Filterhilfsmitteln) jeweils ein Filterkuchen aufbauen kann, der eine gleichmäßige Dicke sowie vor allem auch eine gleichförmige Struktur und Zusammensetzung aufweist.

Bei einer bevorzugten Ausführungsform der erfindungsgemäßen Filtervorrichtung ist an jedem Filterbereich wenigstens eine Austrittsöffnung für ein Spülmittel bzw. für eine Spülflüssigkeit vorgesehen, wobei diese Spülmittelaustrittsöffnungen sämtlicher Filterbereiche mit wenigstens einem gemeinsamen Spülkanal in Verbindung stehen. Bei dieser Ausführung sind dann vorzugsweise für jeden Filterbereich wenigstens zwei derartige Spülmittelaustrittsöffnungen vorhanden, von denen eine erste Spülmittelaustrittsöffnung mit ihrer Achse derart orientiert ist, daß der an dieser Spülmittelaustrittsöffnung austretende Spülmittelstrahl nicht nur die von dem jeweiligen Filterkuchen und der Anschwemmschicht gebildeten Filterrückstände von der zugehörigen Filterschicht ablöst, sondern auch noch eine Rotationsbewegung des Spülmittels und der ab- bzw. aufgelösten Filterrückstände um die Filtermittelachse bewirkt, so daß ein vollständiges Reinigen der Filterbereiche sowie ein vollständiges Austragen der Filterrückstände aus der Filtervorrichtung gewährleistet sind. Die zweite Spülmittelaustrittsöffnung ist dann vorzugsweise mit ihrer Achse in einer vertikalen Ebene angeordnet, die in etwa radial zur Filtermittelachse liegt, so daß durch den aus dieser zweiten Spülmittelaustrittsöffnung austretenden Spülmittelstrahl eventuelle festere oder klumpenförmige Bestandteile der Filterrückstände zertrennt bzw. zerschlagen werden, so daß auch diese im Spülmittel aufgelöst und zusammen mit dem Spülmittel abtransportiert bzw. ausgeräumt werden können. Die Filterrückstände und das Spülmittel werden bevorzugt über dem Unfiltratkanal mit großem Querschnitt abgeführt, wodurch das Reinigen der Filterbereiche in relativ kurzer Zeit mit einem Minimum an Spülmittel möglich ist. Besonder vorteilhaft für eine schnelle und gründliche Reinigung ist es, wenn die Filterelemente bzw. die Filterbereiche einen kreisförmigen Querschnitt aufweisen, so daß es dann möglich ist, an den Filterbereichen einen rotierenden Spülmittelstrom um die Filtermittelachse zu erzeugen.

Weiterbildungen der Erfindung sind Gegenstand der Unteransprüche.

Die Erfindung wird im folgenden anhand der Figuren an Ausführungsbeispielen näher erläutert. Es zeigen:
- Fig. 1: einen Längsschnitt durch eine Filtereinrichtung, und zwar entsprechend der Linie I-I der Fig. 2;
- Fig. 2: einen Horizontalschnitt entsprechend der Linie II-II der Fig. 1;
- Fig. 3: einen Schnitt entsprechend der Linie III-III der Fig. 2;
- Fig. 4: einen Schnitt entsprechend der Linie IV-IV der Fig. 1;
- Fig. 5 und 6: in ähnlicher Darstellung wie Fig. 1 zwei weitere Ausführungsformen der erfindungsgemäßen Filtereinrichtung;
- Fig. 7: im Vertikalschnitt und in vergrößerter Detaildarstellung der Fig. 6 eines der scheibenartigen Filterelemente sowie eine zusätzliche, über diesem Filterelement vorgesehene Scheibe im Bereich ihres inneren, die vertikale Filtermittelachse umschließenden Randes, zusammen mit einem an seinem inneren Rand zwischen dem Filterelement und der zusätzlichen Scheibe eingespannten Filtergewebe;
- Fig. 8: in ähnlicher Darstellung wie Fig. 1 eine weitere Ausführungsform der erfindungsgemäßen filtereinrichtung;
- Fig. 9: einen Schnitt entsprechend der Linie V-V der fig. 8 bzw. in Teildarstellung eine Draufsicht auf eines der Filterelemente der Filtereinrichtung gemäß Fig. 8.

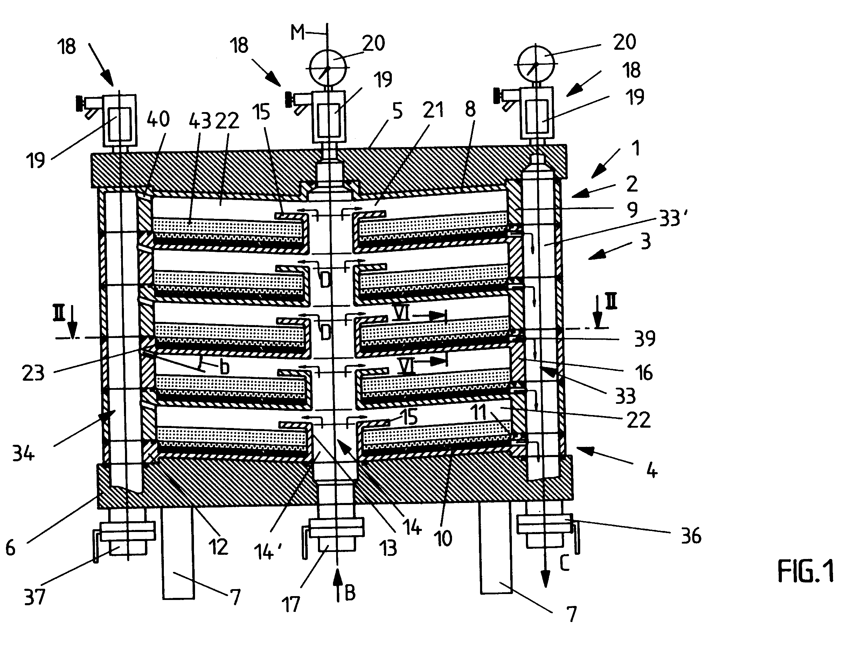

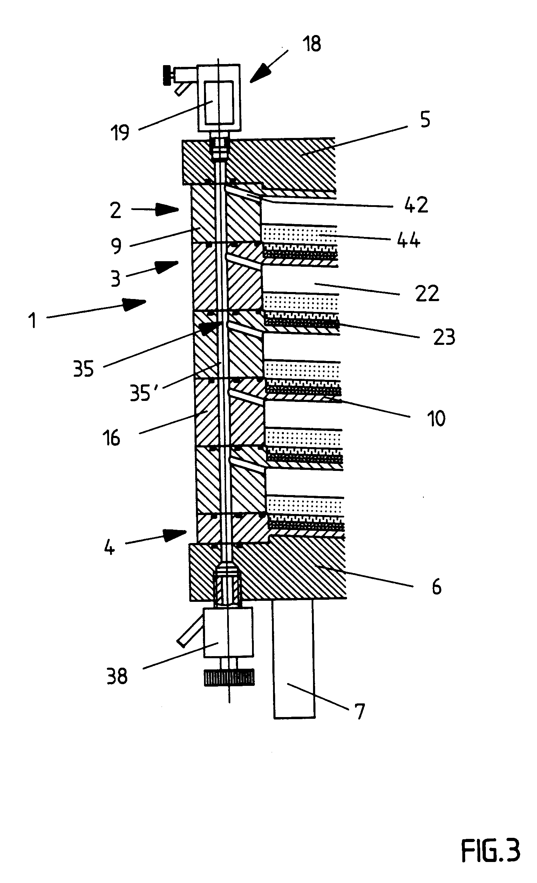

In den Fig. 1-4 ist eine Filtereinrichtung 1 in Form einer Filterpresse, die mehrere horizontale, an ihrem Umfang jeweils kreisringförmige und als Trubrahmen ausgebildete Filterelemente 2, 3 bzw. 4 aufweist, die mit ihrer Mittelachse achsgleich mit einer vertikalen Filtermittelachse M liegen und zwischen einem ortsfesten oberen Deckel 5 und einem unteren vertikal beweglichen Deckel 6 gehalten sind, der zum Anpressen der Filterelemente 2-4 gegeneinander bzw. zum Zusammenhalt dieser Filterelemente mit Anpreßeinrichtungen 7 zusammenwirkt, die beispielsweise hydraulisch betätigbar sind.

Das unmittelbar unterhalb des Deckels 5 angeordnete oberste Filterelement 2 besitzt eine im wesentlichen kreisscheibenförmige Deckenwand 8, die mit ihrer Oberseite flächig gegen die Unterseite des Deckels 5 anliegt und am Außenumfang des Filterelementes 2 in eine über die Unterseite der Deckenwand 8 wegstehende, die Filtermittelachse konzentrisch umschließende ringförmige Umfangswand 9 übergeht. Das unterste, unmittelbar über dem Deckel 6 angeordnete Filterelement 4 weist eine ringförmige Bodenwand 10 auf, die mit ihrer Unterseite flächig gegen die Oberseite des Deckels 6 anliegt und am Außenumfang des Filterelementes 4 in einen über die Oberseite der Bodenwand 10 vorstehenden, die Filtermittelachse M konzentrisch umschließenden ringförmigen Vorsprung 11 sowie in einen über die Unterseite der Bodenwand 10 vorstehenden, die Filtermittelachse M ebenfalls konzentrisch umschließenden ringförmigen Vorsprung 12 übergeht, welch letzterer zur Justierung und Fixierung des Filterelementes 4 am Deckel 6 in eine dort vorgesehene ringartige Ausnehmung eingreift.

Im Bereich der Filtermittelachse M geht die Bodenwand 10 in einen über die Oberseite dieser Bodenwand wegstehenden und die Filtermittelachse M konzentrisch umschließenden kreiszylinderförmigen Wandabschnitt 13 über, der einen zur Oberseite und Unterseite des Filterelementes 4 hin offenen Kanalabschnitt 14′ umschließt und an seinem oberen Rand mit einem im wesentlichen parallel zu und im Abstand von der Bodenwand 10 angeordneten und in bezug auf die Filtermittelachse M über den Wandabschnitt 13 radial nach außen wegstehenden Flansch oder Wandabschnitt 15 versehen ist, der sich ausgehend von dem Wandabschnitt 13 über einen Teil der Breite des zwischen diesem Wandabschnitt 13 und dem Vorsprung 11 gebildeten ringförmigen Bereichs des Filterelementes 4 bzw. der Bodenwand 10 erstreckt. Bei der dargestellten Ausführungsform weist der ringförmige Wandabschnitt 15 einen Außendurchmesser auf, der größer ist als der Außendurchmesser des Wandabschnittes 13, jedoch wesentlich kleiner ist als der Außendurchmesser der Bodenwand 10 im Bereich des Vorsprunges 11.

Die zwischen den Filterelementen 2 und 4 angeordneten Filterelemente 3 sind jeweils gleichartig ausgebildet und unterscheiden sich von dem Filterelement 4 lediglich dadurch, daß ihre Bodenwand 10 am Außenumfang nicht in den Vorsprung 12, sondern in eine über die Unterseite der Bodenwand 10 wegstehende und der Umfangswand 9 entsprechende kreisringförmige Umfangswand 16 übergeht, die die Filtermittelachse M mit dem gleichen radialen Abstand wie die Umfangswand 9 und die Vorsprünge 11 und 12 umschließt. Die Deckenwand 8 sowie die Bodenwände 10 der Filterelemente 2, 3 bzw. 4 sind leicht kegelscheibenartig derart ausgebildet, daß die Deckenwand 8 und die Bodenwände 10 in Richtung von der Filtermittelachse M zum Außenumfang der Filterelemente 2, 3 bzw. 4 jeweils leicht schräg nach oben verlaufen. Grundsätzlich können die Deckenwand 8 sowie die Bodenwände 10 auch in horizontalen Ebenen vorgesehen sein.

Bei zwischen den Deckeln 5 und 6 eingespannten Filterelementen 2, 3 und 4 liegen das Filterelement 2 mit dem unteren Rand seiner Umfangswand 9 und jedes Filterelement 3 mit dem unteren Rand seiner Umfangswand 16 gegen den oberen Rand des Vorsprungs 11 des darunterliegenden Filterelementes 3 bzw. 4 an. Die achsgleich miteinander sowie achsgleich mit der Filtermittelachse M angeordneten Kanalabschnitte 14′ bilden im Inneren der Filtereinrichtung 1 einen vertikalen, zum Zuführen der zu filternden Flüssigkeit (Unfiltrat) dienenden Unfiltratkanal 14, der durch den Deckel 6 führt und mit einem an der Unterseite dieses Deckels vorgesehenen Einlaß 17 verbunden ist. Durch den Deckel 5 steht der von den Kanalabschnitten 14′ gebildete Unfiltratkanal 14 mit einem an der Oberseite des Deckels 5 vorgesehenen Ablaßventileinrichtung 18 in Verbindung, die neben einem Schauglas 19 einen Druckmesser 20 aufweist.

Durch entsprechende Wahl der Höhe der Umfangswände 9 bzw. 16 ist dafür gesorgt, daß bei zwischen den Deckeln 5 und 6 eingespannten Filterelementen 2, 3 und 4 der Wandabschnitt 15 des obersten Filterelementes 3 mit Abstand unterhalb der Deckenwand 8 und entsprechend die Wandabschnitte 15 der darunterliegenden Filterelemente 3 bzw. 4 jeweils mit Abstand unterhalb der Bodenwand 10 des darüberliegenden Filterelementes 3 angeordnet sind, so daß zwischen jedem Wandabschnitt 15 und der darüberliegenden Deckenwand 8 bzw. Bodenwand 10 für jedes Filterelement 2, 3 bzw. 4 ein ringförmiger Verteilerraum 21 gebildet ist, der an seiner bezogen auf die Filtermittelachse M radial innen liegenden Seite zu dem Unfiltratkanal 14 und an seiner radial außen liegenden Seite zu jeweils einem Filter- oder Trubraum 22 offen ist, von denen der oberste Trubraum 22 zwischen der Deckenwand 8 und einer auf der Oberseite der Bodenwand 10 des darunter angeordneten Filterelementes 3 aufliegenden Filterschicht 23 und die übrigen Trubräume 22 zwischen der Unterseite einer Bodenwand 10 und der auf der Oberseite einer Bodenwand 10 des jeweils darunterliegenden Filterelementes 3 bzw. 4 aufgebrachten Filterschicht 23 gebildet sind.

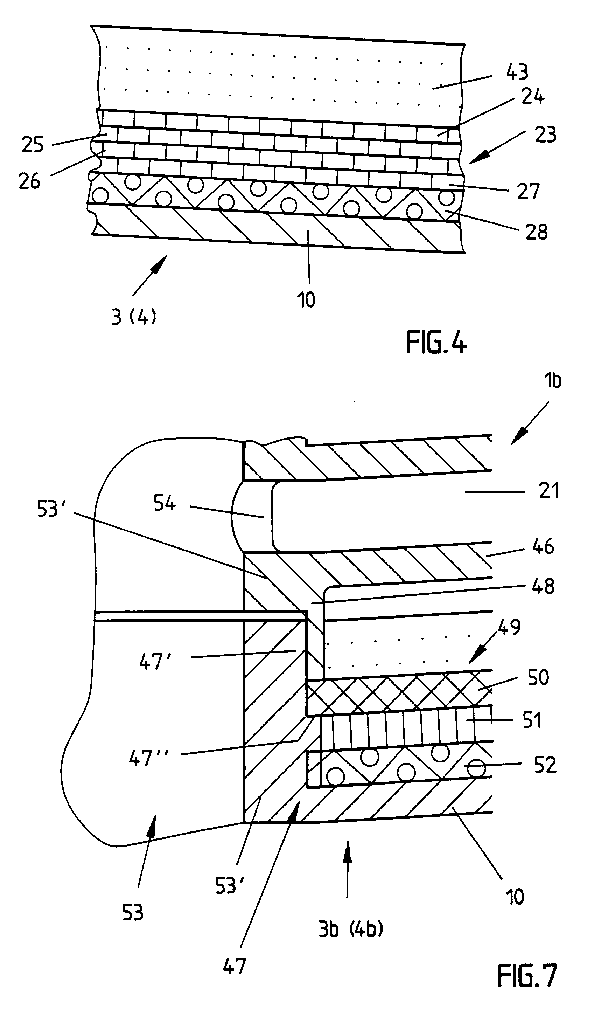

Der Aufbau der jeweils gleichartig ausgeführten Filterschichten 23 ist aus der Fig. 4 ersichtlich. Jede Filterschicht 23 besteht bei der dargestellten Ausführungsform aus mehreren Lagen, die jeweils aus einem Gewebe aus korrosionsbeständigem Material, bevorzugt aus korrosionsbeständigem Stahl gebildet sind und durch Sintern zu einer Gewebeanordung miteinander verbunden sind. Ausgehend von der dem jeweiligen Trubraum 22 zugewandten Oberseite besteht jede Filterschicht 23 aus einem Schutzgewebe 24, aus einem unter diesem Schutzgewebe 24 angeordneten feinmaschigen Filtergewebe 25, aus einem unter dem Filtergewebe 25 vorgesehenen Verteilergewebe 26 sowie aus einem Stützgewebe 27, von denen das Verteilergewebe 26 grobmaschiger als das Filtergewebe 25 und das Stützgewebe 27 grobmaschiger als das Verteilergewebe 26 sind. Das Stützgewebe 27 liegt auf der Oberseite eines Drainagegewebes 28 auf, welches bei der dargestellten Ausführungsform Teil der in dem jeweiligen Filterelement 3 bzw. 4 eingeschweißten Gewebeanordnung ist und welches sich seinerseits mit seiner Unterseite auf der Oberseite der Bodenwand 10 dieses Filterelementes 3 bzw. 4 abstützt. Das Drainagegewebe 28, welches insbesondere auch im Vergleich zum Stützgewebe 27 sehr viel grobmaschiger ausgeführt ist, dient im wesentlichen dazu, um unterhalb der von dem Schutzgewebe 24, dem Filtergewebe 25, dem Verteilergewebe 26 und dem Stützgewebe 27 gebildeten Gewebeanordnung einen Bereich zu bilden, in welchem sich die gefilterte Flüssigkeit (Filtrat) sammeln kann und aus welchem dieses Filtrat abgeführt wird und der als Filtratsammelbereich bezeichnet ist. Das Drainagegewebe 28 kann auch durch andere Maßnahmen, die einen entsprechenden Abstand zwischen der Bodenwand 10 und dem Stützgewebe 27 sicherstellen, ersetzt sein. So ist es beispielsweise möglich, anstelle des Drainagegewebes 28 die Oberseite der Bodenwand 10 mit beispielsweise noppen- oder leistenartigen Vorsprüngen zu versehen. Bei der dargestellten Ausführungsform sind das Schutzgewebe 24, das Filtergewebe 25, das Verteilergewebe 26, das Stützgewebe 27 und vorzugsweise auch das Drainagegewebe 28 in geeigneter Weise miteinander verbunden und bilden eine mehrlagige Gewebeanordnung, aus der durch entsprechende Zuschnitte die Filterschichten 23 (vorzugsweise einschließlich des Drainagegewebes 28) hergestellt sind.

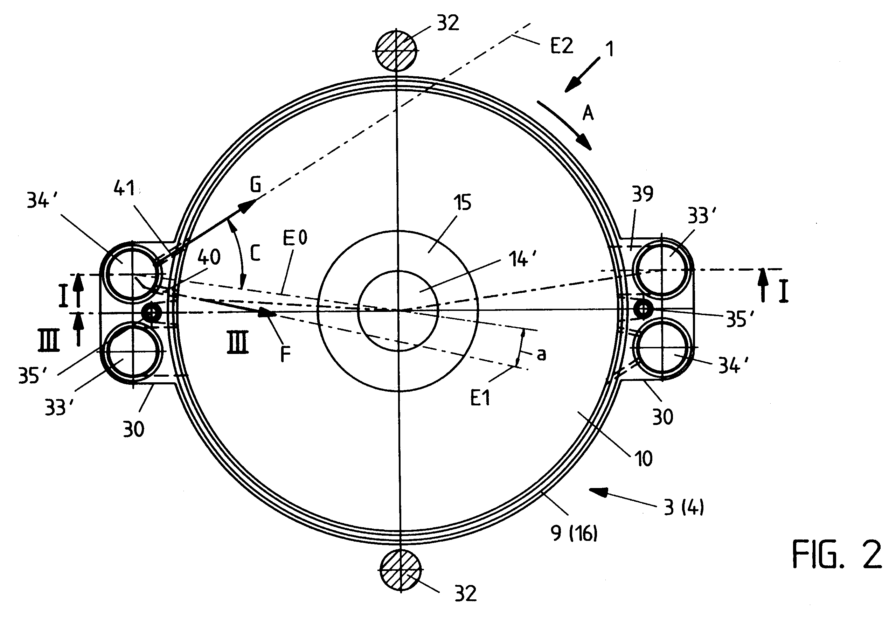

Wie insbesondere die Fig. 2 zeigt, sind die Filterelemente 2, 3 und 4 an ihrem äußeren Umfang bzw. an der Außenfläche ihrer Umfangswand 9 bzw. 16 einstückig mit über diese Außenfläche wegstehenden Vorsprüngen 30 ausgebildet. In den beiden Vorsprüngen 30 sind jeweils drei Kanalabschnitte 33′, 34′ und 35′ mit kreisförmigem Querschnitt eingebracht, die an der Oberseite sowie an der Unterseite dieser Vorsprünge bzw. der Filterelemente 2, 3 und 4 offen sind. Die Anordnung der Kanalabschnitte 33′ - 35′ ist so getroffen, daß in einer bestimmten Umfangsrichtung, d.h. bei der für die Fig. 2 gewählten Darstellung entsprechend dem Pfeil A im Uhrzeigersinn an jedem Vorsprung 30 auf den Kanalabschnitt 33′ der Kanalabschnitt 34′ folgt, wobei diese Kanalabschnitte 33′ und 34′ jeweils den gleichen radialen Abstand von der Filtermittelachse M aufweisen und bezogen auf die Filtermittelachse M jedem Kanalabschnitt 33′ an einem Vorsprung 30 der entsprechende Kanalabschnitt 33′ am anderen Vorsprung 30 diametral gegenüberliegt. Gleiches gilt auch für die Kanalabschnitte 34′ der beiden Vorsprünge 30. Die Kanalabschnitte 33′ und 34′ besitzen jeweils gleichen Querschnitt. Zwischen diesen Kanalabschnitten 33′ und 34′ ist an jedem Vorsprung 30 mit geringerem radialen Abstand von der Filtermittelachse M der Kanalabschnitt 35′ mit einem im Vergleich zu den Kanalabschnitten 33′ und 34′ wesentlich kleineren Querschnitt vorgesehen, und zwar derart, daß sich die beiden Kanalabschnitte 35′ bezogen auf die Filtermittelachse M wiederum diametral gegenüberliegen.

Bei zwischen den Deckeln 5 und 6 angeordneten Filterelementen 2, 3 und 4 liegen die Kanalabschnitte 33′, 34′ und 35′ jedes Filterelementes 2, 3 bzw. 4 jeweils deckungsgleich mit einem entsprechenden Kanalabschnitt 33′, 34′ bzw. 35′ der übrigen Filterelemente 2, 3 bzw. 4, womit die Kanalabschnitte 33′ sämtlicher Filterelemente zwei parallel zur Filtermittelachse M verlaufende Filtratkanäle 33 zum Abführen der gefilterten Flüssigkeit (Filtrat) bilden, die sich auch durch den unteren Deckel 6 hindurch bis zu jeweils einem Auslaß 36 für das Filtrat fortsetzen. In gleicher Weise bilden die Kanalabschnitte 34′ zwei bezogen auf die Filtermittelachse M um 180° gegeneinander versetzte, parallel zur Filtermittelachse M liegende und zum Reinigen der Filterelemente 2, 3 und 4 bzw. der Trubräume 22 dienende Spülkanäle 34, die sich durch den unteren Deckel 6 bis zu einem an der Unterseite dieses Deckels vorgesehenen Einlaß 37 für ein Spülmittel (Spülflüssigkeit) fortsetzen. Die Filtratkanäle 33 sowie die Spülkanäle 34 erstrecken sich auch durch den oberen Deckel 5, wo an die Filtratkanäle 33 ebenfalls eine Ablaßventileinrichtung 18 mit Schauglas 19 sowie ein Druckmesser 20 und an die Spülkanäle 34 eine Ablaßventileinrichtung 18 mit dem Schauglas 19, allerdings ohne den Druckmesser 20 angeschlossen sind. Die Kanalabschnitte 35′ bilden zwei um 180° gegeneinander versetzte und parallel zur Filtermittelachse M verlaufende Entlüftungskanäle 35, die sich durch die Deckel 5 und 6 erstrecken und an der Unterseite des Deckels 6 mit einem Ventil 38 sowie an der Oberseite des Deckels 5 mit einer Ablaßventileinrichtung 18 versehen sind. Es versteht sich, daß bei zwischen den Deckeln 5 und 6 angeordneten Filterelementen 2, 3 und 4 diese Filterelemente an ihrem Umfang sowie auch im Bereich ihrer Vorsprünge 29 und 30 unter Verwendung von Dichtungselementen bzw. Dichtungsringen derart dicht aneinander anschließen, daß sowohl der von den Filterelementen 2, 3 und 4 gebildete Innenraum der Filtereinrichtung 1, als auch der Unfiltratkanal 14, die Filtratkanäle 33, Spülkanäle 34 und Entlüftungskanäle 35 nach außen hin abgedichtet sind.

Jedes Filterelement 3 und 4 weist in dem Vorsprung 11 zwei schlitzförmige Öffnungen 39 auf, die jeweils in einen Kanalabschnitt 33′ sowie an der Innenfläche des Vorsprunges 11 unmittelbar über der Oberseite der Bodenwand 10 in den Filtratsammelbereich münden, der von dem Drainagegewebe 28 unterhalb des Stützgewebes 27 gebildet ist.

Weiterhin weist jedes Filterelement 2 und 3 an der Innenfläche der Umfangswand 9 bzw. 16 unmittelbar unterhalb der Deckenwand 8 bzw. der Bodenwand 10 zwei Paare von jeweils zwei Austrittsöffnungen für ein Spülmittel auf. Bei der dargestellten Ausführungsform sind diese Austrittsöffnungen jeweils von einem Kanal 40 bzw. 41 gebildet, von denen jeder Kanal 40 und 41 mit einem Ende an der Innenfläche der Umfangswand 9 bzw. 16 offen ist und mit seinem anderen Ende in den zugehörigen Kanalabschnitt 34′ und damit in einen der beiden Spülkanäle 14 mündet. Wie die Fig. 1 und 2 zeigen, liegen sämtliche, in einen gemeinsamen Spülkanal 34 mündende Kanäle 40 aller Filterelemente 2 und 3 mit ihrer Längserstreckung in einer gemeinsamen vertikalen Ebene E1, die mit einer vertikalen, die Filtermittelachse M sowie die Achse des betreffenden Spülkanals 34 einschließenden und die Ebene E1 entlang der Achse des betreffenden Spülkanals 34 schneidenden Bezugsebene E0 einen Winkel a bildet, derart daß bei einem angenommenen Umlaufssinn um die Filtermittelachse M entsprechend dem Pfeil A jeweils auf die Ebene E1 die Bezugsebene E0 folgt. Die Kanäle 40 sind weiterhin gegenüber der Horizontalen so geneigt, daß die Längserstreckung jedes Kanales 40 mit der darüberliegenden Deckenwand 8 bzw. Bodenwand 10 einen spitzen Winkel b einschließt, der sich zur Filtermittelachse M hin öffnet. Der Winkel a beträgt bei der dargestellten Ausführungsform nur wenige Grad.

Die Kanäle 41 sind ausgehend von dem jeweiligen Kanalabschnitt 34′ ähnlich den Kanälen 40 ebenfalls schräg nach unten verlaufend geneigt. Die an einem gemeinsamen Spülkanal 34 vorgesehenen Kanäle 41 sämtlicher Filterelemente 2 und 3 liegen mit ihren Achsen in einer gemeinsamen vertikalen Ebene E2, die mit der Bezugsebene E0 einen spitzen Winkel c einschließt. Der Winkel c ist dabei wesentlich größer als der Winkel a, aber auch wesentlich kleiner als 90° und liegt beispielsweise in der Größenordnung von 45°. Der Winkel c öffnet sich bei den Kanälen 41 beider Spülkanäle 34 in der gleichen Umfangsrichtung, d.h. in Richtung des Pfeiles A. Für die weiter unten noch beschriebene Spülfunktion ist es allerdings nicht unbedingt erforderlich, daß die Kanäle 40 und 41 die vorbeschriebenen Richtungen aufweisen. Erforderlich ist vielmehr lediglich, daß die an den Innenflächen der Umfangswand 9 bzw. 16 für das Spülmittel vorgesehenen Austrittsöffnungen, die beispielsweise auch von Düsenöffnungen eingesetzter oder eingeschraubter Düsen gebildet sein können, Spülmittelstrahlen erzeugen, die entsprechend der vorbeschriebenen Lage der Achsen der Bohrungen 40 und 41 orientiert sind.

Im Bereich der Umfangswand 9 bzw. 16 ist jedes Filterelement 2 bzw. 3 noch mit jeweils zwei weiteren Kanälen 42 versehen, von denen jeder an der Innenfläche der Umfangswand 9 bzw. 16 unmittelbar unter der Deckenwand 9 bzw. der Bodenwand 10 mit einem Ende offen ist und mit seinem anderen Ende in einen Kanalabschnitt 35′ mündet. Auch diese die Trubräume 22 mit den Entlüftungskanälen 35 verbindenden Kanäle 42 sind entsprechend den Kanälen 40 bzw. 41 gegenüber der Horizontalen leicht schräg nach unten geneigt.

Zu Beginn des jeweiligen Filtrationsvorganges wird zunächst in üblicher Weise in einer Anschwemmphase unter Verwendung wenigstens eines Filterhilfsmittels auf der Oberseite der Filterschichten 23 eine von diesem Filterhilfsmittel gebildete Anschwemmschicht 43 mit der erforderlichen Dicke aufgebaut. Nach Abschluß dieser Anschwemmphase bzw. Voranschwemmung erfolgt dann in ebenfalls üblicher Weise die Filtration, bei der das Unfiltrat entsprechend dem Pfeil B über den Einlaß 17 zugeführt und das Filtrat über die beiden unterhalb des Deckels 6 vorgesehenen und vorzugsweise miteinander verbundenen Auslässe 36 entsprechend dem Pfeil C abgeführt wird. Das Unfiltrat gelangt dabei über den Einlaß 17, über den Unfiltratkanal 14 und über die Verteilerkammern 21 in die einzelnen Trubräume 22, in denen dann die Flüssigkeit die Anschwemmschicht 43 und die Filterschicht 23 unter Abscheidung der Trub- bzw. Feststoffe auf bzw. in der Anschwemmschicht 43 durchströmt, so daß das Filtrat über den jeweiligen, vom Drainagegewebe 28 gebildeten Filtratsammelbereich und durch die Öffnungen 39 in die Filtratkanäle 33 abfließen kann.

Wie in der Fig. 1 mit den Pfeilen D angegeben ist, erfolgt beim Eintritt des Unfiltrats aus dem Unfiltratkanal 14 in die Verteilerkammern 21 jeweils eine Umlenkung des Unfiltrats um 90° in der Form, daß die Strömungsrichtung dieses Unfiltrats nach dem Eintritt in jede Verteilerkammer 21 bezogen auf die Filtermittelachse M radial nach außen gerichtet ist. Da durch die ringförmige Ausbildung der Verteilerkammern 21 deren wirksamer Querschnitt mit zunehmendem Abstand von der Filtermittelachse M zunimmt, wird innerhalb der Verteilerkammern 21 eine zunehmende Verlangsamung der Strömungsgeschwindigkeit des Unfiltrats erreicht, so daß dieses auch bei einer relativ hohen, je Zeiteinheit dem Einlaß 17 zugeführten Menge an Unfiltrat beim Austritt aus der jeweiligen Verteilerkammer 21 in den zugehörigen Trubraum 22 nur eine sehr geringe Strömungsgeschwindigkeit aufweist, und zwar mit einer ausgeprägten, radial von der Filtermittelachse M weg gerichteten Strömungskomponente. Dadurch, daß das Unfiltrat aus der jeweiligen Verteilerkammer 21 in den zugehörigen Trubraum 22 mit einer stark reduzierten Strömungsgeschwindigkeit eintritt, dieser Eintrittsbereich durch die Wandabschnitte 13 und 15 mit Abstand oberhalb der jeweiligen Filterschicht 23 und der auf dieser ausgebildeten Anschwemmschicht 43 liegt, d.h. die Filterschicht 23 und die Anschwemmschicht 43 sozusagen im "Strömungsschatten", zumindest der radialen Strömungskomponente des in den Trubraum 22 eintretenden Unfiltrats liegen und letzteres erst nach erfolgter Reduzierung der Strömungsgeschwindigkeit und nach einer nochmaligen Umlenkung um etwa 90° nach unten in die Anschwemmschicht 43 eintritt, ist selbst bei relativ hoher Mengenleistung (je Zeiteinheit zugeführte Menge an Unfiltrat) sichergestellt, daß auf der Filterschicht 23 eine für Tiefenfiltration geeignete Anschwemmschicht 43 in gleichmäßiger Struktur bzw. Zusammensetzung abgeschieden wird und diese Anschwemmschicht 43 auch bei der eigentlichen Filtration erhalten bleibt und nicht durch Aufwirbeln bzw. Abschwemmen in bestimmten Bereichen der Filterschicht 23 verlorengeht bzw. unbrauchbar wird. Dies ist auch gewährleistet, wenn im Wege einer üblichen Voranschwemmung eine Anschwemmschicht 43 aufgebracht wird und darauf bei der eigentlichen Filtration die Trub- und Feststoffe zusammen mit den bei der Filtration dem Unfiltrat zugesetzten Filterhilfsmitteln abgeschieden werden. Wesentlich für die vorbeschriebene Wirkungsweise der Filtereinrichtung 1 und die damit verbundenen Vorteile ist auch, daß das Unfiltrat, welches über den Einlaß 17 dem Unfiltratkanal 14 von unten zugeführt wird, beim Austritt aus der jeweiligen Verteilerkammer 21 und auch noch danach im jeweiligen Trubraum 22 zunächst eine radial zur Filtermittelachse M verlaufende Strömungsrichtung aufweist.

Nach Beendigung der Filtration kann die Filtereinrichtung mittels eines geeigneten Spülmittels einfach und problemlos gereinigt werden. Hierfür wird das Spülmittel mit entsprechendem Druck über die Einlässe 37 den beiden Spülkanälen 34 zugeführt, so daß das Spülmittel dann an den mit den Spülkanälen 34 in Verbindung stehenden und bei der dargestellten Ausführungsform von den Kanälen 40 und 41 gebildeten Austrittsöffnungen in die Trubräume 22 als Spülmittelstrahlen eintritt, wie dies in der Figur 2 mit den Pfeilen F und G angedeutet ist. Durch das aus den Kanälen 41 bzw. aus den entsprechenden Austrittsöffnungen in Richtung des Pfeiles G austretende Spülmittel werden die gelösten Bestandteile der Anschwemmschicht 43 (Filterrückstände) bzw. des Filterkuchens innerhalb des jeweiligen Trubraumes 22 in Richtung des Pfeiles A in Rotation versetzt, während gleichzeitig das aus den Kanälen 40 bzw. aus entsprechenden Austrittsöffnungen in Richtung des Pfeiles F austretende Spülmittel einen im wesentlichen radial nach innen gerichteten Spülmittelstrahl oder Gegenstrom erzeugt, der zu einem Zerkleinern von ev. größeren Bestandteilen oder Klumpen der ab gelösten Filterrückstände und damit zu einem völligen Auflösen dies er Filterrückstände sorgt, die dann zusammen mit dem Spülmittel durch den von den Unfiltratkanal 14 und über den Einlaß 17 abgeführt werden können.

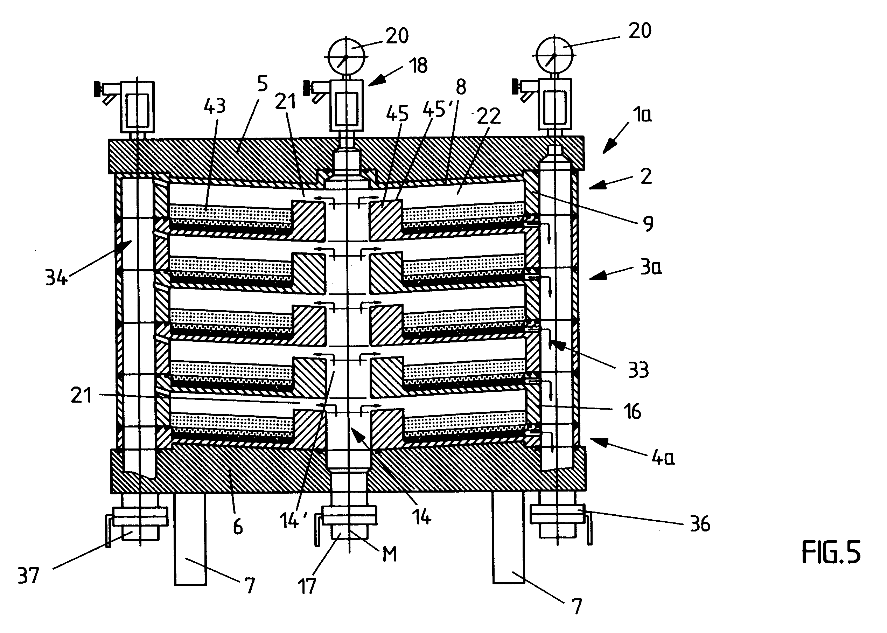

Die in der Fig. 5 dargestellte Filtereinrichtung 1a unterscheidet sich von der Filtereinrichtung 1 im wesentlichen nur dadurch, daß die dortigen, zusammen mit dem Filterelement 2 verwendeten Filterelemente 3a und 4a, die hinsichtlich ihrer Anordnung, Funktion und sonstigen Ausbildung den Filterelementen 3 und 4 entsprechen, anstelle der Wandabschnitte 13 und 15 einen die Filtermittelachse M konzentrisch umschließenden und mit der jeweiligen Bodenwand 10 verbundenen oder einstückig ausgebildeten Ring 45 aufweisen, dessen Außendurchmesser in etwa gleich dem Außendurchmesser der Wandabschnitte 15 der Filterelemente 3 und 4 der Filtereinrichtung 1 ist. Jeder Ring 45 bildet wiederum mit seiner Innenfläche einen Kanalabschnitt 14′ und mit seiner oben liegenden Ringfläche 45′ zusammen mit der Unterseite der Deckenwand 8 des Filterelementes 2 bzw. der Bodenwand 10 des darüberliegenden Filterelementes 3a die ringförmige Verteilerkammer 21.

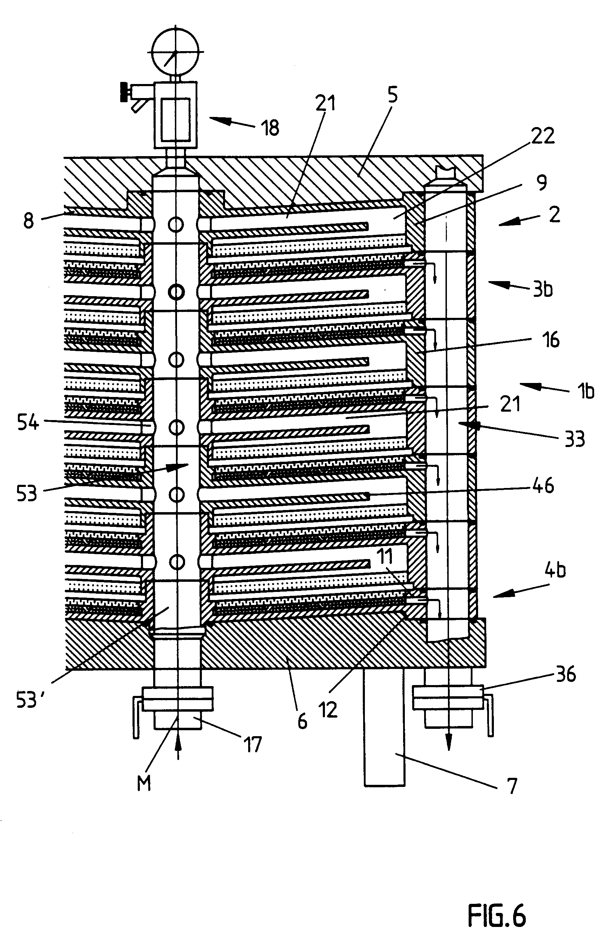

Fig. 6 zeigt eine Filtereinrichtung 1b, die sich von der Filtereinrichtung 1 im wesentlichen dadurch unterscheidet, daß anstelle der Filterelemente 3 und 4 zusammen mit dem Filterelement 2 die Filterelemente 3b und 4b verwendet sind, die hinsichtlich ihrer Anordnung und Funktion den Filterelementen 3 bzw. 4 der Filtereinrichtung 1 entsprechen. Bei der Filtereinrichtung 1b sind allerdings die Filterelemente 3b und 4b jeweils zweiteilig ausgebildet, d.h. sie bestehen jeweils aus einer oberen zusätzlichen Scheibe 46 und aus einem unteren, scheibenartigen Teil, der die Bodenwand 10 des jeweiligen Filterelementes 3b bzw. 4b bildet und am Außenumfang wiederum den an die Bodenwand 10 anschließenden, über die Oberseite der Bodenwand vorstehenden ringartigen Vorsprung 11 sowie die über die Unterseite der Bodenwand 10 wegstehende Umfangswand 16 (bei den Filterelementen 3b) bzw. den über die Unterseite der Bodenwand 10 wegstehenden Vorsprung 12 (bei dem Filterelement 4b) aufweist.

An dem die Filtermittelachse M umschließenden inneren Bereich ist jedes Filterelement 3b bzw. 4b mit einem über die Oberseite der Bodenwand 10 vorstehenden kreiszylinderförmigen Flansch 47 versehen, auf dem die zusätzliche Scheibe 46 lösbar befestigt ist, und zwar derart, daß diese Scheibe mit einem über die Unterseite der Scheibe 46 vorstehenden ringförmigen Flansch 48 den Flansch 47 im Bereich eines Abschnitts 47′ mit vermindertem Außendurchmesser umschließt. Die der Filterschicht 23 entsprechende Filterschicht 49 ist bei der Filtereinrichtung 1b von einer oberen Lage aus einer für die Anschwemmschicht 43 üblichen Trägerschicht, Filtermembrane oder aus einem Filtergewebe 50 gebildet, welche bzw. welches am inneren Rand der Filterelemente 3b und 4b zwischen dem Flansch 48 und einem Absatz 47˝ des Flansches 47 und am äußeren Rand der Filterelemente 3b bzw. 4b zwischen dem ringartigen Vorsprung 11 des jeweiligen Filterelementes und der Umfangswand 9 bzw. 16 des jeweils darüberliegenden Filterelementes 2 bzw. 3b dicht eingespannt ist. Das Filtergewebe 50 liegt auf einem Stützgewebe 51 und letzteres auf einem sich gegen die Oberseite der Bodenwand 10 abstützenden Drainagegewebe 52 auf.

Bei der Filtereinrichtung 1b umschließen die Scheiben 46 sowie die Filterelemente 2, 3b und 4b ein achsgleich mit der Filtermittelachse M liegendes Rohrstück 53′, welches den mit dem Einlaß 17 verbundenen Unfiltratkanal 53 bildet und sich auch in die Deckel 5 und 6 erstreckt. Bevorzugt ist das Rohrstück 53′ von mehreren dicht aneinander anschließenden Rohrabschnitten gebildet, die dann entweder an den Scheiben 46 oder an den Filterelementen 2, 3b, 4b befestigt sind, wobei dann ein solcher Rohrstückabschnitt auch am Deckel 6 bzw. 5 vorgesehen ist. Das Rohrstück 53′ weist eine Vielzahl von Öffnungen 54 auf, von denen jeweils mehrere in jede Verteilerkammer 21 münden, die jeweils zwischen der Oberseite einer Scheibe 46 und der darüberliegenden Deckenwand 8 bzw.

Bodenwand 10 gebildet sind. Hinsichtlich der Filtratkanäle 33, der gebildeten Spülkanäle 34 sowie der gebildeten Entlüftungskanäle 35 und der zugehörigen Elemente entspricht die Filtereinrichtung 1b der Filtereinrichtung 1. Dies gilt auch für die Funktion und Wirkung der Verteilerkammern 21, wobei es durch die von den Filterelementen 3b und 4b abnehmbaren Scheiben 46 und durch die dadurch geschaffene Möglichkeit einer besseren Zugänglichkeit der Oberseite der Bodenwände 10 dieser Filterelemente beispielsweise für den Einbau der Filterschicht 49 möglich ist, für die Scheiben 46 einen Außendurchmesser zu wählen, der größer ist als der Außendurchmesser der Wandabschnitte 15 bzw. der Ringe 45 bei den Filtereinrichtungen 1 und 1a, womit die Wirkung der Verteilerkammern 21 noch wesentlich verbessert werden kann. Die Filtereinrichtungen 1a und 1b haben gegenüber der Filtereinrichtung 1 auch noch den grundsätzlichen Vorteil, daß die jeweilige Filterschicht 23 bzw. 49 oder die diese Filterschichten bildenden Lagen jeweils als einstückiger Zuschnitt auf die Bodenwände 10 aufgebracht werden können.

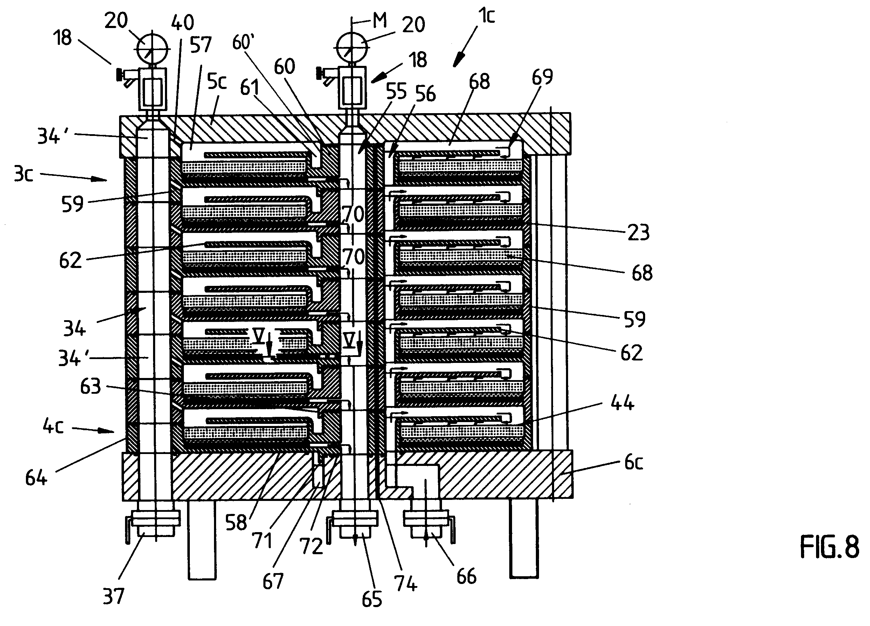

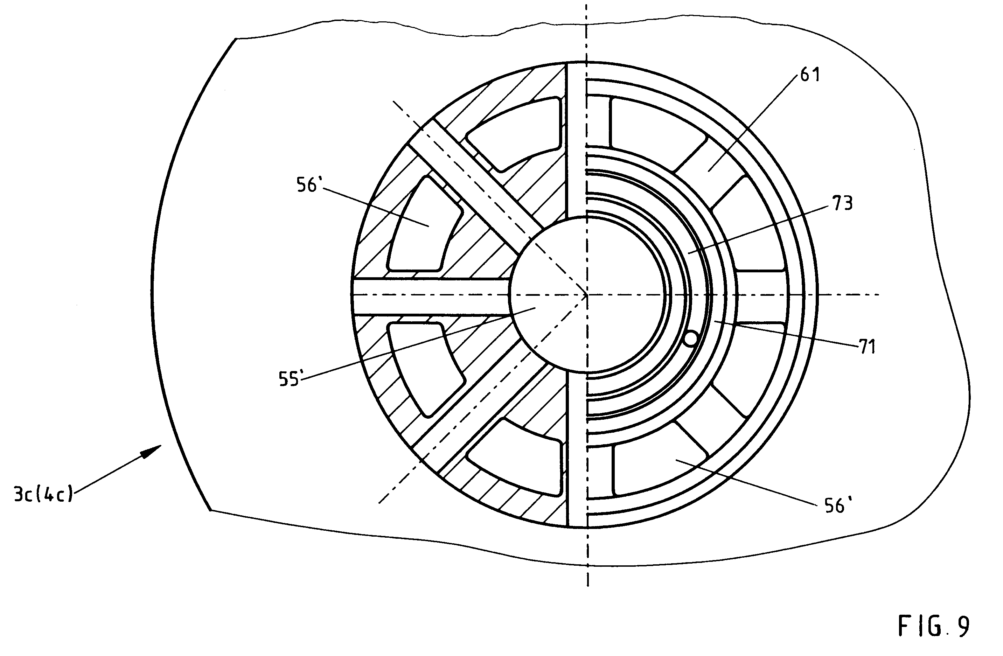

Die Fig. 8 und 9 zeigen eine Filtereinrichtung 1c, die wiederum als Filterpresse ausgebildet ist und aus dem zwischen den Deckeln 5c und 6c angeordneten Trubrahmen bzw. Filterelementen 3c und 4c besteht.

Die Filtereinrichtung 1c unterscheidet sich von der Filtereinrichtung 1 im wesentlichen dadurch, daß der Filtratkanal 55 in der Mitte der Filtereinrichtung 1c achsgleich mit der Filtermittelachse M vorgesehen ist, und daß um diesen Filtratkanal 55 verteilt mehrere parallel zur Filtermittelachse M verlaufende Unfiltratkanäle 56 vorgesehen sind, die ihrerseits von den Trubräumen umschlossen werden. An der Außenseite der Filterelemente 3c und 4c sind auch bei dieser Ausführungsform wiederum die Spülkanäle 34 sowie die nicht dargestellten Entlüftungskanäle 35 vorgesehen.

Das oberste Filterelement 3c, welches sich unmittelbar an die Unterseite des Deckels 5c anschließt, der an dieser Unterseite mit einer die Filtermittelachse M umschließenden kreisringförmigen Ausnehmung 57 versehen ist, besteht ebenso wie die nach unten anschließenden weiteren Filterelemente 3c aus einer kreisscheibenförmigen, in einer horizontalen Ebene angeordneten Bodenwand 58, die an der Außenseite des Filterelementes 3c in eine die Filtermittelachse M konzentrisch umschließende kreisringförmige Umfangswand 59 übergeht, welche über die Oberseite sowie die Unterseite der Bodenwand 58 vorsteht. In der Mitte jedes Filterelementes 3c geht die Bodenwand 58 in einen über die Oberseite dieser Bodenwand 58 vorstehenden Ring 60 über, der einen zur Oberseite und Unterseite des Filterelementes 3c hin offenen Kanalabschnitt 55′ aufweist. Weiterhin ist jeder Ring 60 an seiner Oberseite mit einer die Filtermittelachse M konzentrisch umschließenden und zu der Oberseite hin offenen ringförmigen Nut 61 versehen, über deren, der Filtermittelachse M näherliegenden Rand der Ring 60 mit einem Abschnitt 60′ mit vermindertem Querschnitt vorsteht und an deren der Filtermittelachse M entfernter liegenden Rand am Ring 60 ein radial nach außen von diesem Ring wegstehender Flansch oder Wandabschnitt 62 vorgesehen ist, welcher parallel zu und mit Abstand über der Bodenwand 58 des betreffenden Filterelementes 3c vorgesehen ist. Der Außendurchmesser jedes scheibenförmigen Wandabschnittes 62 ist kleiner als der Durchmesser, den das betreffende Filterelement 3c an der Innenfläche der Umfangswand 59 aufweist. In dem Ring 60 jedes Filterelementes 3c sind um die Filtermittelachse M verteilt Kanalabschnitte 56′ ausgebildet, die jeweils an der Unterseite des Filterelementes 3c offen sind und an der Oberseite des Filterelementes 3c in die Nut 61 münden. Im Bereich des Ringes 60 weist jedes Filterelement 3c an seiner Unterseite weiterhin einen ringförmigen Flansch 63 auf, der den Abschnitt 60′ des jeweils darunterliegenden Filterelementes 3c bzw. 4c umfaßt. Der Flansch 63 kann im Bereich der Kanalabschnitte 56′ auch jeweils unterbrochen sein. Das Filterelement 4c unterscheidet sich von den Filterelementen 3c lediglich dadurch, daß am Filterelement 4c der über die Unterseite der Bodenwand 58 wegstehende Teil der Umfangswand 59 entfallen ist, so daß das Filterelement 4c mit der Unterseite seiner Bodenwand 59 flächig gegen die Oberseite des Deckels 6c aufliegt.

An der Umfangswand 59 sind die Filterelemente 3c und 4c wiederum mit den Vorsprüngen 30 entsprechenden Vorsprüngen 64 ausgebildet, die die Kanalabschnitte 34′ aufweisen.

Bei zwischen den Deckeln 5c und 6c angeordneten Filterelementen 3c und 4c liegen die Kanalabschnitte 34′, 55′ und 56′ der einzelnen Filterelemente 3c und 4c deckungsgleich miteinander, so daß die Kanalabschnitte 34′ den durchgehenden Spülkanal 34, die Kanalabschnitte 55′ den durchgehenden Filtratkanal 55 und die Kanalabschnitte 56′ mehrere durchgehende Unfiltratkanäle 56 bilden, von denen bei der dargestellten Ausführungsform insgesamt acht um den Filtratkanal 55 verteilt vorgesehen sind. In den Spülkanal 34, welcher auch bei dieser Ausführungsform wiederum den unter dem Deckel 6c vorgesehenen Einlaß 37 aufweist und mit der an der Oberseite des Deckels 5c vorgesehenen Ablaßventileinrichtung 18 mit Druckmesser 20 verbunden ist, münden wiederum die Kanäle 40 und 41, von denen in der Fig. 8 nur die Kanäle 40 dargestellt sind. Diese Kanäle 40 und 41 sind auch im Deckel 5c vorgesehen und münden dort einerseits in die Ausnehmung 57 und andererseits in den im Deckel 5c ebenfalls ausgebildeten Kanalabschnitt 34′.

Für den Filtratkanal 55 ist an der Unterseite des Deckels 6c ein Auslaß 65 vorgesehen. An seinem oberen Ende steht der Filtratkanal 55 mit einer dort vorgesehenen Ablaßventileinrichtung 18 mit Druckmesser 20 in Verbindung. An der Unterseite des Deckels 6c ist weiterhin ein Einlaß 66 vorgesehen, der mit einem im Deckel 6c ausgebildeten und zur Oberseite dieses Deckels hin offenen nutenartigen Ringkanal 67 in Verbindung steht, der seinerseits eine Verbindung zu den einzelnen Unfiltratkanälen 56 herstellt.

Der Wandabschnitt 62 jedes Filterelementes 3c bzw. 4c bildet zwischen sich und der darüberliegenden Begrenzungswand, die bei dem obersten Filterelement von der Bodenfläche der Ausnehmung 57 im Deckel 5c und bei den darunterliegenden Filterelementen jeweils von der Unterseite der Bodenwand 58 des darüberliegenden Filterelementes 3c gebildet ist, eine ringförmige Verteilerkammer 68, die hinsichtlich ihrer Funktion und Wirkung der Verteilerkammer 21 entspricht. Weiterhin ist in jedem Filterelement 3c bzw. 4c wiederum ein ringförmiger Trubraum 69 ausgebildet, und zwar im wesentlichen unterhalb des jeweiligen Wandabschnittes 62 und oberhalb der sich auf der Oberseite der jeweiligen Bodenwand 58 abstützenden Filterschicht 23. Um das sich unterhalb der Filterschicht 23 bzw. im Filtratsammelbereich des Drainagegewebes 28 sammelnde Filtrat in den Filtratkanal 55 abzuführen, sind im Bereich des Ringes 60 jedes Filterelementes 3c bzw. 4c gegenüber den Kanalabschnitten 56′ versetzte, im wesentlichen radial zur Filtermittelachse M verlaufende Bohrungen oder Kanäle 70 vorgesehen, die jeweils mit einem Ende in den vom Drainagegewebe 28 gebildeten Filtratsammelbereich und mit dem anderen Ende in den Filtratkanal 55 münden.

Die einzelnen Filterelemente 3c und 4c liegen wiederum im Bereich ihrer Umfangswände 59, im Bereich ihrer Ringe 60 sowie im Bereich ihrer Vorsprünge 64 unter Verwendung von Dichtungsringen dicht gegeneinander sowie auch dicht gegen die Deckel 5c und 6c an. Bei der dargestellten Ausführungsform sind an den Ringen 60 bzw. an den dortigen Anschlußbzw. Übergangsbereichen zwischen den einzelnen Filterelementen 3c und 4c sowie an den Übergängen zwischen dem Filterelement 3c und dem Deckel 5c bzw. zwischen dem Filterelement 4c und dem Deckel 6c jeweils zwei konzentrische Dichtungsringe 71 und 72 mit einer dazwischenliegenden, die Filtermittelachse M konzentrisch umschließenden Nut 73 vorgesehen, welch letztere in einen parallel zur Filtermittelachse M verlaufenden Drainagekanal 74 mündet, so daß trotz der engen raumlichen Anordnung zwischen dem Unfiltratkanälen 56 und dem Filtratkanal 55 bei einer ev. Undichtheit eines Dichtungsringes 71 bzw. 72 Unfiltrat nicht direkt in den Filtratkanal 55 gelangen kann, sondern über den an der Unterseite des Deckels 6c offenen Drainagekanal 74 abfließt.

Auch die Filtereinrichtung 1c bietet bei relativ einfacher konstruktiver Ausbildung hinsichtlich der Verringerung der Strömungsgeschwindigkeit des Unfiltrats in den Verteilerkammern 68 sowie hinsichtlich der Reinigung bzw. des Austrags der Filterrückstände die gleichen Vorteile, wie sie oben im Zusammenhang mit der Filtereinrichtung 1 beschrieben wurden.

## Patentansprüche

1. Filtervorrichtung mit mehreren in Richtung einer vertikalen Filtermittelachse (M) übereinander angeordneten, im wesentlichen horizontalen Filterbereichen, denen wenigstens ein gemeinsamer Unfiltratkanal (14; 53; 56) zum Zuführen einer zu filternden Flüssigkeit (Unfiltrat) sowie wenigstens ein gemeinsamer Filtratkanal (33; 55) zum Abführen der gefilterten Flüssigkeit (Filtrat) zugeordnet ist und die jeweils wenigstens eine an einem Filterelement (3, 4; 3a, 4a; 3b, 4b; 3c, 4c) vorgesehene Filterschicht (23; 49) aufweisen, die für das Anschwemmen wenigstens einer von mindestens einem Filterhilfsmittel gebildeten Anschwemmschicht dient und einen in den Filtratkanal (33; 55) mündenden Filtratsammelbereich von einem darüberliegenden Trubraum (22; 69) trennt, sowie mit einer für jeden Filterbereich vorgesehenen, die Filtermittelachse (M) umschließenden ringartigen Verteilerkammer (21; 68), die an ihrem Umfang in einem größeren, ersten radialen Abstand von der Filtermittelachse (M) an einer Austrittsöffnung in den Trubraum (22; 69) mündet und in einem kleineren, zweiten radialen Abstand von der Filtermittelachse (M) wenigstens eine mit dem Unfiltratkanal (14; 53; 56) in Verbindung stehende Eintrittsöffnung für das Unfiltrat aufweist, wobei der von den Filterbereichen umschlossene Austritt des Unfiltratkanals (14; 53; 56) im Bereich der Filtermittelachse (M) vorgesehen ist, dadurch gekennzeichnet, daß die Fließrichtung aus dem Unfiltratkanal (14; 53; 56) in die Verteilerkammer (21; 68), in der Verteilerkammer selbst und aus der Verteilerkammer in den Trubraum (22; 69) radial erfolgt, wobei die Austrittsöffnung frei von Fließquerschnittsverengungen ist.

2. Filtervorrichtung nach Anspruch 1, dadurch gekennzeichnet, daß bei Ausbildung der Filtervorrichtung (1; 1a; 1b; 1c) als Filterpresse die Filterelemente (2, 3, 4; 3a, 4a, 3b, 4b; 3c, 4c) zwischen einem oberen und einem unteren Deckel (5, 6; 5c, 6c) angeordnete horizontale Trubrahmen sind, und daß zwischen zwei in Richtung der Filtermittelachse (M) aufeinanderfolgenden Filterelementen (2, 3, 4; 2, 3a, 4a; 2, 3b, 4b) sowie ggf. zwischen der Unterseite des oberen Deckels (5) und dem darunterliegenden Filterelement (3c) jeweils ein nach außen hin geschlossener Trubraum (22; 69) gebildet ist.

3. Filtervorrichtung nach einem der Ansprüche 1 bis 2, dadurch gekennzeichnet, daß die die Filterschichten (23; 49) aufweisenden Filterelemente (3, 4; 3a, 4a; 3b, 4b; 3c, 4c) jeweils eine im wesentlichen horizontale und die Filtermittelachse (M) umschließende Bodenwand (10; 58) besitzen, auf der die jeweilige Filterschicht (23; 49) vorgesehen ist, und daß jedes dieser Filterelemente (3, 4; 3a, 4a; 3b, 4b; 3c, 4c) mit Abstand über seiner Bodenwand (10; 58) eine die Filtermittelachse (M) konzentrisch umschließende erste Begrenzungsfläche (15; 45'; 46; 62) aufweist, die zwischen sich und einer darüberliegenden zweiten Begrenzungsfläche (8; 10; 5c; 58) die Verteilerkammer (21; 68) bildet.

4. Filtervorrichtung nach Anspruch 3, dadurch gekennzeichnet, daß die zweite Begrenzungsfläche bei der obersten Verteilerkammer (21; 68) von der Unterseite einer Deckenwand (8) eines darüberliegenden Filterelementes (2) oder von der Unterseite des oberen Deckels (5c) und bei den darunterliegenden Verteilerkammern (21; 68) jeweils von der Unterseite der Bodenwand (10; 58) des darüberliegenden Filterelementes (3; 3a; 3b; 3c) gebildet ist.

5. Filtervorrichtung nach einem der Ansprüche 3 bis 4, dadurch gekennzeichnet, daß die erste Begrenzungsfläche von der Stirnfläche (45') eines eines die Filtermittelachse (M) konzentrisch umschließenden, über die Oberseite der Bodenwand (10,) des Filterelementes (3a,) vorstehenden ringartigen Vorsprungs (45) oder von der Oberseite eines von einem solchen ringartigen Vorsprung (13; 47; 60) bezogen auf die Filtermittelachse (M) radial nach außen verlaufenden ringartigen Wandabschnitts (15; 46; 62) gebildet ist.

6. Filtervorrichtung nach Anspruch 5, dadurch gekennzeichnet, daß sich der die erste Begrenzungsfläche der jeweiligen Verteilerkammer (21; 68) bildende Wandabschnitt (15; 46; 62) in Richtung von der Filtermittelachse (M) zu einem äußeren Rand der Filterelemente (3, 4; 3b, 4b; 3c, 4c) über einen Teil der Breite der darunterliegenden Bodenwand (10; 58) erstreckt.

7. Filtervorrichtung nach Anspruch 5 oder 6, dadurch gekennzeichnet, daß der Außendurchmesser des die erste Begrenzungsfläche der jeweiligen Verteilerkammer (21; 68) bildenden Vorsprungs (45) bzw. Wandabschnitts (15; 46; 62) kleiner ist als der Außendurchmesser der darunterliegenden kreisringförmigen Bodenwand (10; 58).

8. Filtervorrichtung nach einem der Ansprüche 5 bis 7 , dadurch gekennzeichnet, daß der die erste Begrenzungsfläche der jeweiligen Verteilerkammer (21) bildende Wandabschnitt eine Scheibe (46) ist, die lösbar an einem die Bodenwand (10) aufweisenden Teil des Filterelementes (3b, 4b) befestigt ist.

9. Filtervorrichtung nach Anspruch 1, dadurch gekennzeichnet, daß die Eintrittsöffnungen, über die der Unfiltratkanal (14) in die Verteilerkammer (21) mündet, dadurch gebildet sind, daß jedes Filterelement (3, 4; 3a, 4a; 3b, 4b) in seinem die Filtermittelachse (M) bzw. den Unfiltratkanal (14) umschließenden Bereich mit axialem Abstand von dem darüberliegenden Filterelement (2, 3; 2, 2a; 2, 3b) oder von der Unterseite eines darüberliegenden Deckels (5) angeordnet ist.

10. Filtervorrichtung nach Anspruch 1 oder 9 , dadurch gekennzeichnet, daß der wenigstens eine Filtratkanal (33) gegenüber der Filtermittelachse (M) radial versetzt an der äußeren Umfangsfläche der Filterelemente (2, 3, 4; 3a, 4a; 3b, 4b) vorgesehen ist.

11. Filtervorrichtung nach einem der Ansprüche 1 bis 8 , dadurch gekennzeichnet, daß der Filtratkanal (55) achsgleich mit der Filtermittelachse (M) vorgesehen ist, und daß der wenigstens eine Unfiltratkanal (56) gegenüber der Filtermittelachse (M) versetzt dem Filtratkanal (55) benachhart derart angeordnet ist, daß auch der wenigstens eine Unfiltratkanal von den Filterbereichen umschlossen ist.

12. Filtervorrichtung nach Anspruch 11 , dadurch gekennzeichnet, daß um den Filtratkanal (55) verteilt mehrere Unfiltratkanäle (56) vorgesehen sind.

13. Filtervorrichtung nach Anspruch 11 oder 12, dadurch gekennzeichnet, daß die Filterelemente (3c, 4c) in ihrem den Filtratkanal (55) umschließenden mittleren Bereich dicht aneinander bzw. dicht an den oberen und/oder unteren Deckel (5c, 6c) anschließen.

14. Filtervorrichtung nach Anspruch 13, dadurch gekennzeichnet, daß im Anschlußbereich zwischen zwei Filterelementen (3c, 4c) und/oder zwischen einem Filterelement (3c, 4c) und einem Deckel (5c, 6c) jeweils zwei, einen unterschiedlichen Durchmesser aufweisende und die Filtermittelachse (M) konzentrisch umschließende Ringdichtungen (71, 72) sowie eine zwischen diesen Ringdichtungen angeordnete Ringnut (73) vorgesehen sind, welch letztere in wenigstens einen parallel zur Filtermittelachse (M) verlaufenden Drainagekanal (74) mündet.

15. Filtervorrichtung nach einem der Ansprüche 1 bis 14, gekennzeichnet durch wenigstens einen für sämtliche Filterbereiche gemeinsamen vertikalen Spülkanal (34), der mit jeweils wenigstens einer an jedem Filterbereich vorgesehenen Spülmittelaustrittsöffnung (40, 41) in Verbindung steht.

16. Filtervorrichtung nach Anspruch 15 , dadurch gekennzeichnet, daß die wenigstens eine Spülmittelaustrittsöffnung (40, 41) für jeden Filterbereich oberhalb der Filterschicht (23, 49) dieses Filterbereichs vorgesehen und mit ihrer Achse derart angeordnet ist, daß sie einen schräg nach unten auf die Filterschicht (23, 49) des Filterbereichs gerichteten Spülmittelstrahl (F, G) erzeugt.

17. Filtervorrichtung nach Anspruch 15 oder 16, dadurch gekennzeichnet, daß die Achsen wenigstens eines Teils der Spülmittelaustrittsöffnungen (41) in einer ersten vertikalen Ebene (E2) liegen, die mit einer die Filtermittelachse (M) sowie die Achse des Spülkanals (34) einschließenden Bezugsebene (E0) einen ersten Winkel (c) kleiner als 90° , vorzugsweise einen Winkel kleiner als 45° einschließt.

18. Filtervorrichtung nach Anspruch 17, dadurch gekennzeichnet, daß für jeden Filterbereich jeweils wenigstens zwei Spülmittelaustrittsöffnungen (40, 41) vorgesehen sind, von denen eine erste Spülmittelaustrittsöffnung (41) mit ihrer Achse in der ersten vertikalen Ebene (E2) und eine zweite Spülmittelaustrittsöffnung (40) mit ihrer Achse in einer zweiten vertikalen Ebene (E1) angeordnet ist, welch letztere radial oder nahezu radial zur Filtermittelachse (M) verläuft oder mit der vertikalen Bezugsebene (E0) einen zweiten Winkel (a) wesentlich kleiner als 90° einschließt.

19. Filtervorrichtung nach Anspruch 18, dadurch gekennzeichnet, daß sich der erste Winkel (c) und der zweite Winkel (a) zu verschiedenen Seiten der Bezugsebene (E0) öffnen.

20. Filtervorrichtung nach einem der Ansprüche 16 bis 19, dadurch gekennzeichnet, daß um die Filtermittelachse (M) um 180° gegeneinander versetzt zwei Spülkanäle (34) vorgesehen sind.

21. Filtervorrichtung nach einem der Ansprüche 1 bis 20, dadurch gekennzeichnet, daß der wenigstens eine Unfiltratkanal (14; 53; 56) und/oder der wenigstens eine Filtratkanal (33; 55) und/oder der wenigstens eine Spülkanal (34) jeweils von in den Filterelementen (2, 3, 4; 3a, 4a; 3b, 4b; 3c, 4c) ausgebildeten Kanalabschnitten (14', 33', 34'; 53', 55', 56') gebildet sind.

22. Filtervorrichtung nach einem der Ansprüche 1 bis 21, dadurch gekennzeichnet, daß der unter jeder Filterschicht (23) vorgesehene Filtratsammelbereich von einem Drainagegewebe (28) gebildet ist.

23. Filtervorrichtung nach einem der Ansprüche 1 bis 22, dadurch gekennzeichnet, daß die Filterschichten (23) jeweils von einer, vorzugsweise auch das Drainagegewebe (28) aufweisenden Gewebeanordnung (24 - 28) gebildet sind, die aus mehreren Lagen aus jeweils wenigstens einem Gewebe besteht und bei der vorzugsweise wenigstens ein Teil der Gewebe miteinander verbunden ist.

24. Filtervorrichtung nach Anspruch 23, dadurch gekennzeichnet, daß die Gewebeanordnungen (24 - 28) jeweils in die Filterelemente (3, 4; 3a, 4a; 3c, 4c) eingeschweißt sind.

25. Filtervorrichtung nach einem der Ansprüche 1 bis 24, dadurch gekennzeichnet, daß die Filterelemente (2, 3, 4; 3a, 4a; 3b, 4b; 3c, 4c) zumindest innen einen kreisförmigen Querschnitt aufweisen.

## Claims

1. Filter device with several substantially horizontal filter regions, which are arranged one above the other in the direction of a vertical filter centre line (M), are associated with at least one common non-filtrate channel (14; 53; 56) for the feeding of a liquid (non-filtrate) to be filtered as well as at least one common filtrate channel (33; 55) for the removal of the filtered liquid and which each display at least one respective filter layer (23; 29), which is provided at a filter element (3, 4; 3a, 4a; 3b, 4b; 3c, 4c) and serves for alluvial flow to at least one alluvial layer formed by at least one filtering aid and separates a filtrate collecting region opening into the filtrate channel (33; 55) from a filling chamber (22; 69) lying thereabove, as well as with a ringlike distributor chamber (21; 68), which is provided for each filter region, encloses the filter centre line (M) and which at its circumference opens into the filling chamber (22, 69) at an exit opening at a greater first radial spacing from the filter centre line (M) and displays at least one entry opening, which is for the non-filtrate and stands in connection with the non-filtrate channel (14; 53; 56), at a smaller second radial spacing from the filter centre line (M), wherein the outlet of the non-filtrate channel (14; 53; 56) surrounded by the filter regions is provided in the region of the filter centre line (M), characterised thereby, that the flow direction out of the non-filtrate channel (14; 53; 56) into the distributor chamber (21; 68), in the distributor chamber itself and out of the distributor chamber into the filling chamber (22, 69) is radial, wherein the exit opening is free of flow cross-section constrictions.

2. Filter device according to claim 1, characterised thereby, that for the construction of the filter device (1; 1a; 1b; 1c) as filter press, the filter elements (2, 3, 4; 3a, 4a, 3b, 4b; 3c, 4c) are horizontal filling frames arranged between an upper and a lower cap (5, 6; 5c; 6c) and that a respective outwardly closed filling chamber (22; 69) is formed between each two filter elements (2, 3, 4; 2, 3a, 4a; 2, 3b, 4b) following each on the other in the direction of the filter centre line (M) as well as in a given case between the underside of the upper cap (5) and the filter element (3c) lying thereunder.

3. Filter device according to one of the claims 1 and 2, characterised thereby, that the filter elements (3, 4; 3a, 4a; 3b, 4b; 3c, 4c) displaying the filter layers (23; 49) each have a substantially horizontal base wall (10; 58), which surrounds the filter centre line (M) and on which the respective filter layer (23, 49) is provided, and that each of these filter elements (3, 4; 3a, 4a; 3b, 4b; 3c, 4c) at a spacing above its base wall (10; 58) displays a first boundary surface (15; 45'; 46; 62), which concentrically surrounds the filter centre line (M) and between itself and a second boundary surface (8; 10; 5c; 58) lying thereover forms the distributor chamber (21; 68).

4. Filter device according to claim 3, characterised thereby, that the second boundary surface is formed at the uppermost distributor chamber (21; 68) by a ceiling wall (8) of a filter element (2) lying thereover or by the underside of the upper cap (5c) and at the distributor chambers (21; 68) lying thereunder each time by the underside of the base wall (10. 58) of the filter element (3, 3a; 3b; 3c) respectively lying thereover.

5. Filter device according to one of the claims 3 to 4, characterised thereby, that the first boundary surface is formed by the end face (45') of a ringlike projection (45), which concentrically surrounds the filter centre line (M) and projects beyond the upper side of the base wall (10) of the filter element (3a) or by the upper side of a ringlike wall portion (15; 46; 62), which extends radially outwards with respect to the filter centre line (M), of such a ringlike projection (13; 47; 60).

6. Filter device according to claim 5, characterised thereby, that the wall portion (15; 46; 62) forming the first boundary surface of the respective distributor chamber (21, 68) extends over a part of the width of the base wall (10; 58) lying thereunder and in the direction from the filter centre line (M) to an outer rim of the filter elements (3, 4; 3b, 4b; 3c, 4c).

7. Filter device according to claim 5 or 6, characterised thereby, that the external diameter of either the projection (45) or the wall portion (15; 46; 62) forming the first boundary surface of the respective distributor chamber (21, 68) is smaller than the external diameter of the base wall (10; 58) of circularly annular shape lying thereunder.

8. Filter device according to one of the claims 5 to 7, characterised thereby, that the wall portion forming, the first boundary surface of the respective distributor chamber (21) is a plate (46), which is detachably fastened to the filter element (3b, 4b) at a part thereof displaying the base wall (10).

9. Filter device according to claim 1, characterised thereby, that the entry openings, by way of which the non-filtrate channel (14) opens into the distributor chamber (21), are formed thereby, that each filter element (3, 4; 3a, 4a; 3b, 4b) is arranged in its region surrounding the filter centre line (M) or the non-filtrate channel (14) at an axial spacing from the filter element (2, 3; 2, 2a; 2, 3b) lying thereover or from the underside of a cap (5) lying thereover.

10. Filter device according to claim 1 or 9, characterised thereby, that the at least one filtrate channel (33) is provided, displaced radially relative to the filter centre line (M), at the outer circumferential surface of the filter elements (2, 3, 4; 3a, 4a, 3b, 4b).

11. Filter device according to one of the claims 1 to 8, characterised thereby, that the filtrate channel (55) is provided co-axially with the filter centre line (M) and that the at least one non-filtrate channel (56) is arranged, displaced relative to the filter centre line (M), adjacent to the filtrate channel (55) in such a manner that the at least one non-filtrate channel is also surrounded by the filter regions.

12. Filter device according to claim 11, characterised thereby, that several non-filtrate channels (56) are provided distributed around the filtrate channel (55).

13. Filter device according to claim 11 or 12, characterised thereby, that the filter elements (3c, 4c) in their middle region surrounding the filtrate channel (55) adjoin closely either one against the other or against the upper and/or lower cap (5c, 6c).

14. Filter device according to claim 13, characterised thereby, that two respective ring seals (71, 72), which display different diameters and concentrically surround the filter centre line (M) as well as an annular groove (73), which is arranged between these ring seals and opens into at least one drainage channel (74) extending parallelly to the filter centre line (M), are provided in the connecting region between two filter elements (3c, 4c) and/or between one filter element (3c, 4c) and a cap (5c, 6c).

15. Filter device according to one of the claims 1 to 14, characterised by at least one vertical flushing channel (34), which is common to all filter regions and stands in communication with at least one flushing medium exit opening (40, 41) respectively provided at each filter region.

16. Filter device according to claim 15, characterised thereby, that the at least one flushing medium exit opening (40, 41) for each filter region is provided above the filter layer (23, 49) of this filter region and arranged with its axis in such a manner that it produces a flushing medium jet (F, G), which is directed obliquely downwards onto the filter layer (23, 49) of the filter region.

17. Filter device according to claim 15 or 16, characterised thereby, that the axes of at least a part of the flushing medium exit openings (41) lie in a first vertical plane (E2), which is at a first angle (c) of less than 90°, preferably an angle of less than 45°, to a reference plane (E0) including the filter centre line (M) as well as the axis of the flushing channel (34).

18. Filter device according to claim 17, characterised thereby, that at least two flushing medium exit openings (40, 41) are provided for each filter region of which a first flushing medium exit opening (41) is arranged with its axis in the first vertical plane (E2) and a second flushing medium exit opening (40) is arranged with its axis in a second vertical plane (E1), which extends radially or almost radially of the filter centre line (M) or is at a second angle (a) of substantially less than 90° to the vertical reference plane (E0).

19. Filter device according to claim 18, characterised thereby, that the first angle (c) and the second angle (a) subtend different sides of the reference plane (E0).

20. Filter device according to one of the claims 16 to 19, characterised thereby, that two flushing channels (34) are provided, each displaced through 180° relative to the other, around the filter centre line (M).

21. Filter device according to one of the claims 1 to 20, characterised thereby, that the at least one non-filtrate channel (14; 53; 56) and/or the at least one filtrate channel (33; 55) and/or the at least one flushing channel (34) are formed respectively by channel portions (14', 33', 34'; 53', 55', 56') made in the filter elements (2, 3, 4; 3a, 4a, 3b, 4b; 3c, 4c).

22. Filter device according to one of the claims 1 to 21, characterised thereby, that the filtrate collecting region provided under each filter layer (23) is formed by a drainage gauze (28).

23. Filter device according to one of the claims 1 to 22, characterised thereby, that the filter layers (23) are each formed by a respective gauze arrangement (24 to 28), which preferably also displays the drainage gauze (28) and which consists of several layers each of at least one gauze and in which preferably at least a part of the gauzes are connected together.

24. Filter device according to claim 23, characterised thereby, that the gauze arrangements (24 to 28) are each welded into the respective filter elements (3, 4; 3a, 4a; 3c, 4c).

25. Filter device according to one of the claims 1 to 24, characterised thereby, that the filter elements (2, 3, 4; 3a, 4a, 3b, 4b; 3c, 4c) at least inwardly display a circular cross-section.

## Revendications

1. Dispositif filtrant comprenant plusieurs zones de filtration superposées en direction d'un axe de filtre vertical (M) et qui sont orientées pour l'essentiel horizontalement, auxquelles sont coordonnés au moins un canal commun de produit non filtré (14; 53; 56) pour l'amenée d'un liquide à filter (produit non filtré) ainsi qu'au moins un canal commun de filtrat (33; 55) pour l'évacuation du liquide filtré (filtrat) et qui comportent chacune au moins une couche filtrante (23; 49) prévue sur un élément filtrant (3, 4; 3a, 4a; 3b, 4b; 3c, 4c), qui sert au dépôt d'au moins une couche déposée formée par au moins un adjuvant de filtration et sépare une zone de rassemblement de filtrat, laquelle débouche dans le canal de filtrat (33; 55), d'un espace de dépôt (22; 69) situé au-dessus, et comprenant une chambre de répartition annulaire (21; 68) prévue pour chaque zone de filtration et entourant l'axe (M) du filtre, chambre qui débouche à sa périphérie, à une première distance radiale relativement grande de l'axe (M) du filtre, au droit d'une ouverture de sortie, dans l'espace de dépôt (22; 69) et présente, à une seconde distance radiale plus petite de l'axe (M) du filtre, au moins une ouverture d'entrée pour le produit non filtré, ouverture d'entrée qui communique avec le canal de produit non filtré (14; 53; 56), la sortie du canal de produit non filtré (14 ; 53 ; 56), entourée des zones de filtration étant prévue dans la région de l'axe (M) du filtre, dispositif caractérisé en ce que la direction d'écoulement à partir du canal de produit non filtré (14; 53; 56) dans la chambre de répartition (21; 68), à l'intérieur même de la chambre de répartition et à partir de la chambre de répartition dans l'espace de dépôt (22; 69) est radiale, l'ouverture de sortie étant exempte de rétrécissements de la section d'écoulement.

2. Dispositif filtrant selon la revendication 1, caractérisé en ce que, en cas de réalisation du dispositif filtrant (1; 1a; 1b; 1c) comme un filtre-presse, les éléments filtrants (2, 3, 4; 3a, 4a, 3b, 4b; 3c, 4c) sont des cadres de dépôt horizontaux placés entre un couvercle supérieur et un couvercle inférieur (5, 6; 5c, 6c), et qu'un espace de dépôt (22; 69), fermé vers l'extérieur, est formé chaque fois entre deux éléments filtrants (2, 3, 4; 2, 3a, 4a; 2, 3b, 4b) qui se suivent en direction de l'axe (M) du filtre, ainsi que, éventuellement, entre le dessous du couvercle supérieur (5) et l'élément filtrant (3c) sous-jacent.

3. Dispositif filtrant selon la revendication 1 ou 2, caractérisé en ce que les éléments filtrants (3, 4; 3a, 4a; 3b, 4b; 3c, 4c), présentant les couches filtrantes (23; 49), possèdent chacun une paroi de fond (10; 58) essentiellement horizontale et entourant l'axe (M) du filtre, sur laquelle est prévue la couche filtrante (23; 49) correspondante, et que chacun de ces éléments filtrants (3, 4; 3a, 4a; 3b, 4b; 3c, 4c) présente, à distance au-dessus de sa paroi de fond (10; 58), une première surface de délimitation (15; 45', 46; 62) entourant concentriquement l'axe (M) du filtre et qui forme entre elle et une seconde surface de délimitation (8; 10; 5c, 58) située au-dessus, la chambre de répartition (21; 68).

4. Dispositif filtrant selon la revendication 3, caractérisé en ce que la seconde surface de délimitation est formée, dans le cas de la chambre de répartition (21; 68) située tout à fait en haut, par le côté inférieur d'une paroi de dessus (8) d'un élément filtrant (2) situé au-dessus ou par le dessous du couvercle supérieur (5c) et, dans le cas de chacune des chambres de répartition (21; 68) sous-jacentes, par le côté inférieur de la paroi de fond (10; 58) de l'élément filtrant (3; 3a; 3b; 3c) situé au-dessus.

5. Dispositif filtrant selon la revendication 3 ou 4, caractérisé en ce que la première surface de délimitation est formée par la surface d'extrémité (45') d'une saillie annulaire (45) entourant concentriquement l'axe (M) du filtre et dépassant du côté supérieur de la paroi de fond (10) de l'élément filtrant (3a), ou par le côté supérieur d'une portion de paroi annulaire (15; 46; 62) s'étendant radialement vers l'extérieur, par rapport à l'axe (M) du filtre, à partir d'une telle saillie annulaire (13; 47; 60).

6. Dispositif filtrant selon la revendication 5, caractérisé en ce que la portion de paroi (15; 46; 62) formant la première surface de délimitation de la chambre de répartition (21; 68) correspondante, s'étend, dans la direction allant de l'axe (M) du filtre vers un bord extérieur des éléments filtrants (3, 4; 3b, 4b; 3c, 4c), sur une partie de la largeur de la paroi de fond (10; 58) sous-jacente.

7. Dispositif filtrant selon la revendication 5 ou 6, caractérisé en ce que le diamètre extérieur de la saillie (45) ou de la portion de paroi (15; 46; 62) formant la première surface de délimitation de la chambre de répartition (21; 68) correspondante, est plus petit que le diamètre extérieur de la paroi de fond (10; 58) sous-jacente en forme d'anneau circulaire.

8. Dispositif filtrant selon une des revendications 5 à 7, caractérisé en ce que la portion de paroi formant la première surface de délimitation de la chambre de répartition (21) correspondante est un disque (46) fixé amovible à une partie de l'élément filtrant (3b, 4b) comprenant la paroi de fond (10).

9. Dispositif filtrant selon la revendication 1, caractérisé en ce que les ouvertures d'entrée par lesquelles le canal de produit non filtré (14) débouche dans la chambre de répartition (21), sont formées du fait que chaque élément filtrant (3, 4; 3a, 4a; 3b, 4b) est disposé, dans sa région entourant l'axe (M) du filtre ou le canal de produit non filtré (14), à distance axiale de l'élément filtrant (2, 3; 2, 2a; 2, 3b) situé au-dessus ou du dessous d'un couvercle (5) situé au-dessus.

10. Dispositif filtrant selon la revendication 1 ou 9, caractérisé en ce qu'au moins un canal de filtrat (33) est prévu avec un décalage radial par rapport à l'axe (M) du filtre sur la surface périphérique extérieure des éléments filtrants (2, 3, 4; 3a, 4a; 3b, 4b).

11. Dispositif filtrant selon une des revendications 1 à 8, caractérisé en ce que le canal de filtrat (55) est prévu coaxialement à l'axe (M) du filtre et qu'au moins un canal de produit non filtré (56) est disposé, avec un décalage par rapport à l'axe (M) du filtre, à proximité du canal de filtrat (55), de manière que ce canal de produit non filtré soit également entouré des zones de filtration.

12. Dispositif filtrant selon la revendication 11, caractérisé en ce que plusieurs canaux de produit non filtré (56) sont répartis autour du canal de filtrat (55).

13. Dispositif filtrant selon la revendication 11 ou 12, caractérisé en ce que les éléments filtrants (3c, 4c) se raccordent de façon étanche les uns aux autres, ainsi qu'au couvercle supérieur et/ou au couvercle inférieur (5c, 6c), dans leur région centrale entourant le canal de filtrat (55).

14. Dispositif filtrant selon la revendication 13, caractérisé en ce que, dans la région de raccordement entre deux éléments filtrants (3c, 4c) et/ou entre un élément filtrant (3c, 4c) et un couvercle (5c, 6c), on a prévu chaque fois deux joints annulaires (71, 72) ayant des diamètres différents et entourant concentriquement l'axe (M) du filtre, ainsi que, entre ces joints, une rainure annulaire (73) qui débouche dans au moins un canal de drainage (74) orienté parallèlement à l'axe (M) du filtre.

15. Dispositif filtrant selon une des revendications 1 à 14, caractérisé par au moins un canal de lavage vertical (34) qui est commun à toutes les zones de filtration et communique avec au moins une ouverture de sortie de fluide de lavage (40, 41) prévue sur chaque zone de filtration.

16. Dispositif filtrant selon la revendication 15, caractérisé en ce qu'au moins une ouverture de sortie de fluide de lavage (40, 41) pour chaque zone de filtration est prévue au-dessus de la couche filtrante (23, 49) de cette zone de filtration et est disposée par son axe de manière qu'elle produise un jet de fluide de lavage (F, G) dirigé obliquement vers le bas sur la couche filtrante (23, 49) de la zone de filtration.

17. Dispositif filtrant selon la revendication 15 ou 16, caractérisé en ce que les axes d'au moins une partie des ouvertures de sortie de fluide de lavage (41) sont situés dans un premier plan vertical (E2) qui renferme avec un plan de référence (E0) contenant l'axe (M) du filtre ainsi que l'axe du canal de lavage (34), un premier angle (c) plus petit que 90°, de préférence un angle inférieur à 45°.

18. Dispositif filtrant selon la revendication 17, caractérisé en ce que, pour chaque zone de filtration, on a prévu au moins deux ouvertures de sortie de fluide de lavage (40, 41), dont une première (41) est disposée par son axe dans le premier plan vertical (E2) et dont une deuxième ouverture de sortie de fluide de lavage (40) est disposée par son axe dans un deuxième plan vertical (E1), ce dernier étant orienté radialement ou presque radialement par rapport à l'axe (M) du filtre ou renfermant avec le plan de référence (E0) vertical un deuxième angle (a) nettement plus petit que 90°.

19. Dispositif filtrant selon la revendication 18, caractérisé en ce que le premier angle (c) et le deuxième angle (a) s'ouvrent vers des côtés différents du plan de référence (E0).

20. Dispositif filtrant selon une des revendications 16 à 19, caractérise en ce que deux canaux de lavage (34) sont prévus avec un décalage mutuel de 180° autour de l'axe (M) du filtre.

21. Dispositif filtrant selon une des revendications 1 à 20, caractérisé en ce qu'au moins un canal de produit non filtré (14; 54; 56) et/ou au moins un canal de filtrat (33; 55) et/ou au moins un canal de lavage (34) sont formés chaque fois par des tronçons de canal (14', 33', 34'; 53', 55', 56') ménagés dans les éléments filtrants (2, 3, 4; 3a, 4a; 3b, 4b; 3c, 4c).

22. Dispositif filtrant selon une des revendications 1 à 21, caractérisé en ce que la zone de rassemblement de filtrat prévue sous chaque couche filtrante (23), est formée par une toile de drainage (28).

23. Dispositif filtrant selon une des revendications 1 à 22, caractérisé en ce que les couches filtrantes (23) sont constituées chacune par un système de toiles (24 - 28), comprenant de préférence aussi la toile de drainage (28), qui est formé de plusieurs couches ou strates constituées chacune d'au moins une toile et dans lequel de préférence une partie au moins des toiles sont reliées entre elles.

24. Dispositif filtrant selon la revendication 23, caractérisé en ce que les systèmes de toiles (24 - 28) sont soudés chaque fois dans les éléments filtrants (3, 4; 3a, 4a; 3c, 4c).

25. Dispositif filtrant selon une des revendications 1 à 24, caractérisé en ce que les éléments filtrants (2, 3, 4; 3a, 4a; 3b, 4b; 3c, 4c) possèdent au moins à l'intérieur une section droite circulaire.
